Europäisches Patentamt

European Patent Office

Office européen des brevets

(11) Publication number: **0 456 016 A1**

# EUROPEAN PATENT APPLICATION

(21) Application number: 91106226.3

(22) Date of filing: 24.04.91

(51) Int. Cl.5: **F02M 25/10**, F02D 21/02, F02B 47/06

(30) Priority: 27.04.90 IT 2016490

(43) Date of publication of application:
**13.11.91 Bulletin 91/46**

(84) Designated Contracting States:
**AT BE CH DE DK ES FR GB GR IT LI LU NL SE**

(71) Applicant: Santi, Giunio Guido
Via 3a Armata, 6
I-34123 Trieste(IT)

(72) Inventor: Santi, Giunio Guido
Via 3a Armata, 6
I-34123 Trieste(IT)

(74) Representative: Jaumann, Paolo
Studio Brevetti Jaumann S.n.c. Piazza
Castello, 2
I-20121 Milano(IT)

(54) **Injection system to enrich with oxygen an internal combustion engine.**

(57) The subject of this invention consists of an injection system suitable to enrich of pure oxygen or of pure oxygen and water the atmosphere of a combustion chamber (18) of an internal combustion engine (12) in order to favour the perfect combustion and to control the temperature through an increase of mass.

This injection system is moreover equipped with tanks (11) which are kept in adiabatic conditions by proper insulation and refrigeration plants to keep the temperature of the above mentioned tanks around a preset value in order to maintain the stability of the oxidation agent when the engine is running or when it is stopped.

Fig. 1a

Inlet stroke

It is well known that internal combustion engines fuelled by gasoline, diesel oil or other hydrocarbon or mixtures of the said are a source of atmospheric pollution and that major efforts are in progress in order to reduce more and more the presence of pollutants in the discharge gases.

Said pollutants are constituted mainly by three different types of chemical compounds which conventionally are indicated such as HC, to indicate the unburnt particles of fuel, CO to indicate carbon monoxide and NOX to indicate Nitrogen oxydes.

These compounds have a different genesis in so far as the first two, namely HC and CO, i.e. unburnt and carbon monoxide, can be attributed to a poor combustion of the fuel caused by lack of available oxygen, even it some authors attribute to the formation of carbon monoxide the dissociation of the CO2, while the formation of Nitrogen Oxides NOX is attributed almost exclusively to the high temperature in the combustion chamber.

The systems so far proposed to reduce, or at least to contain, the production of pollutant emission are based foundamentally on two different concepts: systems which operate through the after burning of the discharge gases, i.e. the cathalitic muffler, and systems which control the temperature by recirculating the discharge gases or EGR (Exhaust gas recirculation).

The first of these principles is applied to reduce the CO and HC emissions, while the second is applied to reduce the formation of NOX through the control of the combustion temperature.

Both systems have the disadvantage of reducing the power produced by the engine on which they are applied and in particular the second, the EGR, causes problems of instability during operations, especially during transient running and at full power.

Among the numberless systems proposed in order to control the combustion temperature, included the use of stable mixtures of fuel with emulsionized water and the injection of pure water, the famous "hundred plus" of the aircraft at the take off or during combat, no system today has solved the problem of the polluting emissions.

On the other hand it is well known that it is possible to obtain a perfect combustion in an atmosphere of pure oxygen, or in a mixture of air enriched with oxygen, as well as it is possible to control the combustion temperature through the injection of water in the save combustion chamber, according to a technique used in the thermal propulsion systems of the torpedoes.

The air pollution is further worsened during the city traffic by the so called "transient", i.e. by the need to adjust continuously the running of the engine to meet the external conditions. It is well known to everybody the so called "smoke cloud" caused by a bus which starts suddenly as the traffic light become green, after idling the engine during the stop.

Under these circumstances the current systems, e.g. cathalitic mufflers and EGR systems, do not contribute at all to the solution of the problem; the latter must even be excluded while the engine is running idle or under full power.

The experimental work of the Author has demonstrated that a proper fuelling of oxygen to the combustion chamber has the consequence of eliminating totally the presence of carbon monoxide, contrary to the theory which attributes to the dissociation of the CO2 the production of said carbon monoxide.

The subject of the present invention is a system which enables the application of said findings to an internal combustion engine, either Otto or Diesel cycle, in order to obtain a perfect combustion of HC, unburnt, and CO, carbon monoxide, and a control of the combustion temperature in order to reduce, until elimination, the production of NOX even during the "transient".

Description of the functional schemes of the invention and of the preferred systems.

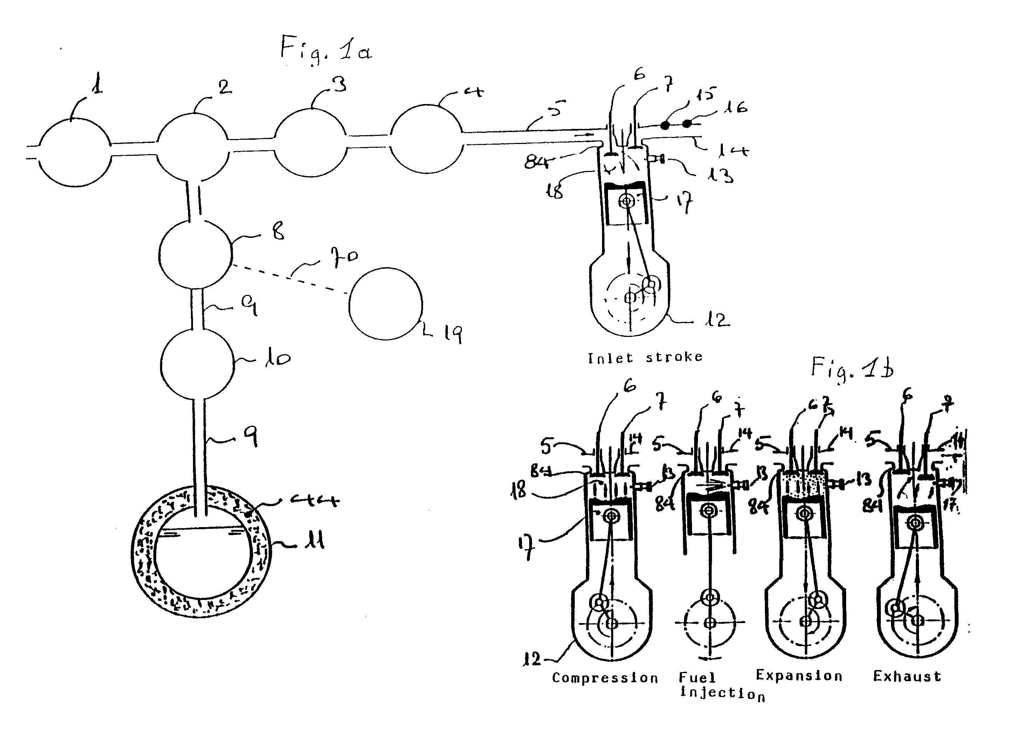

In the first configuration that we now describe, with reference to fig. 1.a, a compression ignition engine 12, intakes ambient air through the intake manifold 5. Air is entering in the combustion chamber 18 through intake valve 6, open, while exhaust valve 7 is closed.

Said air is entering through the intake manifold 5 after having passed through intake filter 1, oxygen injection chamber 2, dynamically mixing chamber 3 and turbolence mixing chamber 4. Oxygen injection chamber 2 is a simple cylinder of thin plate on which are applied one or more metering valves 8, dynamic mixing chamber 3 is made by a convergent-divergent nozzle while turbolence mixing chamber is made by a cylinder of thin plate equipped with elicoidal fins, not indicated in the drawing, in order to guarantee the intimate mixing between the intake air and the gaseous enriching oxygen which we will mention later.

The system is completed by one or more tanks of oxygen 11, oxygen which can be either gaseous or liquid, in fig. 1.a it has been indicated a cryogenic tank 11 with oriogenic insulation 44, a pressure reducing valve 10, which incorporates a Lox evaporator, if requested, a conduit 9 which ties said tank 11 to the pressure reducing evaporating valve 10 and subsequently said valve 10 to metering valve 8 or metering valves 8.

Metering valve 8 is controlled by electronic control unit 19 which pilots the metering of oxygen according to the signals fed by temperature sensor 15, installed inside discharge manifold 14; oxygen percentage senior 16, installed in the same manner in the discharge manifold 16, said sensor 16 is measuring the oxygen percentage in the discharge gases; fuel metering sensor, which meters the fuel injected through the injector 13, being the engine a diesel engine or a similar metering systems being the engine an otto cycle; sensor of rpm of the engine.

The last two sensors, fuel metering and rpm are not indicated in figure 1.

In figure 1. we have indicated a compression ignition engine fig. 1.b and a spark plug ignition engine 1.c which are functioning with the system indicated in fig. 1.a.

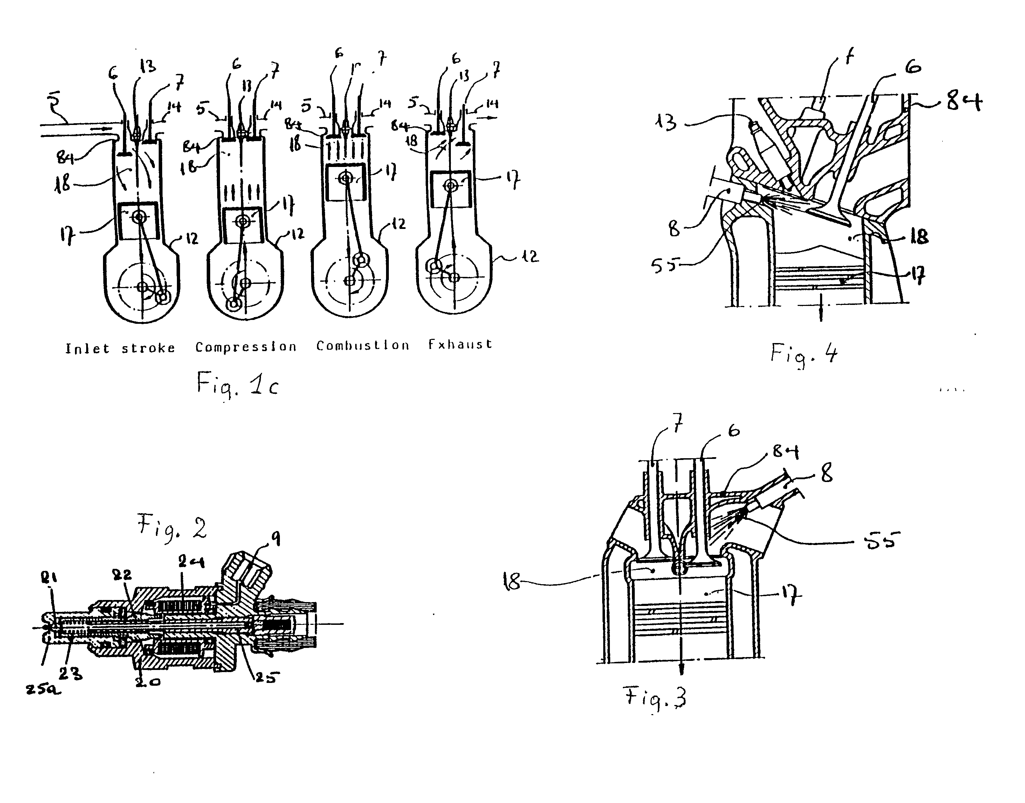

In fig. 2 we have indicated a type of oxygen metering valve 8. The gaseous oxygen coming from tank 11, where is stored as gaseous at high pressure or liquid at low pressure, properly reduced in pressure and vaporized previously, if necessary, is entering body 20 of metering valve 8 through conduit 9. The nose 25a of metering valve 8 is kept closed by needle 21 pressed in the closed position by spring 23, adjusted in strength through variable spring pusher 25.

The magnetic anchor 22 is attracted by magnetic body 24 which can obtain either a full opening, according to the system "all or nothing", or on opening proportional to the exciting current, in this case allowing a gas flow which is a function of the opening caused by the position of needle 21. Therefore the system as described, which is sketched in figure 1.a is made essentially by an internal combustion engine, an oxygen tank liquid or gaseous, a mixing chamber, one or several oxygen metering valves controlled by an electronic control unit which ties together the signal coming from the sensors measuring temperature and oxygen content in the discharge gases, rpm, fuel supply in the combination chamber all described above in order to create in the combustion chamber a mixture of air enriched by pure oxygen in a percentage above the normal oxygen content of the atmospheric air, while the exhaust gases are discharged to the atmosphere.

Let us examine the functioning of the system following the fig. 1.a.

When piston 17 of compression ignition engine 12 intakes air from the atmosphere during the downstroke, through filter 1 and intake manifold 5, electronic unit 19, connected electrically by connection 70 to metering valve 8, compares the information obtained through the sensors described previously with an experimental matrix stored in the memory of said electronic unit 19, make a comparison between the readings and the data stored, and per each loading condition meters the exact quantity of pure oxygen to injection chamber 2.

Therefore through intake manifold 5, in the combustion chamber 18 is entering an air mixture enriched by pure oxygen in a percentage above the standard percentage of the atmospheric air.

Said enrichement is directly linked to the quantity of fuel introduced or injected in the combustion chamber 18.

We have so created the conditions in order to produce a combustion in an oxygen enriched enviroment in such a percentage as to obtain a perfect combustion without the production of unburnt HC or carbon monoxide CO.

In figure 1.b we have indicated the remaining phases of a four stroke compression ignition engine, where it is shown that during the second stroke piston 17, intake and exhaust valves closed, is compressing in combustion chamber 18 a mixture of air enriched by pure oxygen according to our description.

Subsequent the injection of the fuel and its burning is always happening in the said compression chamber 18, in an enriched atmosphere with oxygen metered by metering valve 8 controlled by electronic unit 19, in order to guarantee a perfect combustion. It has been already mentioned that we can have not only one but several metering valves 8.

In figure 1.c we have indicated the sequence of a four stroke spark ignition engine, where intake manifold 5 is fed with oxygen enriched air according to our description as described in figure 1.a.

Even in this case it is easy to understand how the combustion is taking place always in an atmosphere of air enriched by pure oxygen in a percentage above that of atmospheric air. In fig.3 we have schematically indicated only the cylinder head 84 of the engine and its combustion chamber 18, relative to the I.C. engine 12 of the system described in figure 1. in this case we have eliminated the mixing chambers and we have installed metering valve 8 directly in the intake conduit of each cylinder without taking anything out of our invention.In this case electronic control unit 19 will command the opening of oxygen metering valve 8 only when intake valve 6 is open and will close said metering valve as soon as intake valve 6 will close, in order to reduce to the minimum the oxygen consumption.

Figure 4 allows only the cylinder head 84 at the I.C. engine 12, and the combustion chamber 18, of said engine described in fig. 1, where the metering valve 8 has been installed inside the said combustion chamber 18.

Also in this case the oxygen supplied by tank 11 will be metered by metering valve 8, piloted by electronic control unit 19 through electrical connection 70, timed to supply oxygen when intake valve 6 is open. Metering valve 8 is constructed in such manner as to be able to inject oxygen even after intake valve 6 is closed, increasing in such a way not only the oxygen percentage in c. of c. 18 but also increasing in this way the total mass of gases in said chamber of combustion 18.

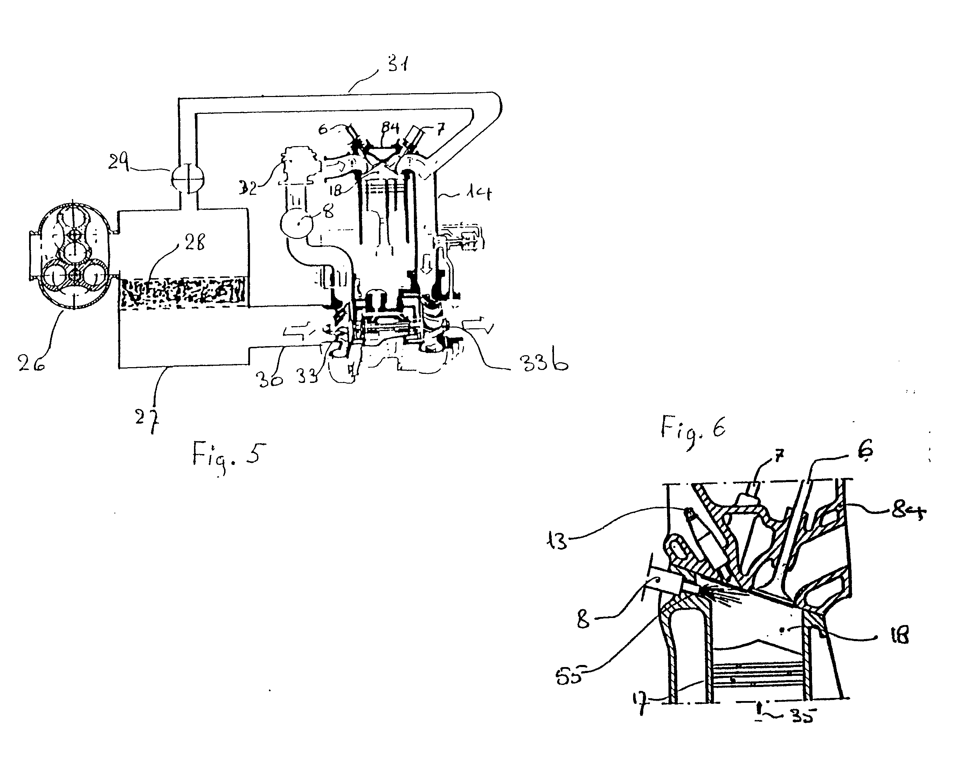

In figure 5 it is illustrated a variation of our invention and we have shown only cylinder head 84 and c. of c. 18 of a turbo supercharged gasoline engine. In this figure we have omitted to indicate oxygen tank 11, which is always part of the system.

Mechanically or dynamically driven compressor 26, drive not indicated in the figure, compresses atmospheric air above ambient pressure in the pressure vessel 27 which is parted internally by a semipermeable membrane 28. Valve 29 is maintaining in the upper part of the tank a preset pressure above ambient, and is discharging the surplus in discharge manifold 14 through conduit 31, i.e.atmospheric air depleted of oxygen because of the semi-permeable membrane 28.

Intake of compressor 26 is equipped with a filter outlet and said compressor is equipped with an intercooler and a further filter not shown in the drawing.

The lower part of pressure tank 27, below the semi-permeable membrane, is connected through conduit 30 to the intake of compressor 33 driven by discharge gas turbine 33 b.

This configuration is instrumental to our invention in order to reduce to the minimum the compression work of compressor 26. It is known that the efficiency of the semipermeable membrane increases with the increase of the pressure ratio across the membrane 28. In our scheme we have achieved that by setting valve 29 only one bar above intake pressure and by generating a depression with the intake of turbocompressor 33 driven by exhaust gas turbine 33 b.

It is known that we can achieve the same pressure ratio across the membrane either by driving compressor 26 with an outlet pressure, e.g. of 5 bars absolute and keeping the inlet pressure in conduit 30 at 1 bar absolute, or by driving compressor 26 at 2 bar absolute and designing turbocompressor 33 to maintain a depression of 0,4 bar absolute in conduit 30.

From conduit 30 turbocompressor 33 is intaking air enriched by the semipermeable membrane with oxygen, is compressing it and supplies it by manifold 34 to carburettor 32, with the option to be further enriched with oxygen with the system of oxygen tank 11 already described, by means of metering valve 8 which can be installed either before or after carburettor 32.

The so enriched air-fuel mixture is then supplied to intake valve 6, which here is indicated closed, having represented the discharge stroke of the engine by showing discharge valve 7 open.

It is obvious that through conduit 31 all the excess mass compressed by compressor 26, in the upper part of pressure tank 27, will increase the supply of hot gas to the exhaust gas turbine, increasing the power of the same.

The turbocompressor, in this way, will be in the position to create the required depression in the lower part of pressure tank 27, enabling in this way semipermeable membrane 28 to operate with the maximum efficiency.

In figure 6 we have indicated a variation of the plant indicated in figure 1a, relative to a Compression Ignition engine or C.I. engine, where we have indicated only the cylinder head 18, piston 17 and intake valve 6 and exhaust valve 7.

In this figure 6 arrow 35 indicates the sense of motion of the piston, which is approaching Top Dead Center at the end of the compression stroke.

Intake valve 6 is closed as well as exhaust valve 7, and fuel injection 13, fed by an injection system not indicated, is spraying fuel in the combustion chamber 18, while metering valve 8, supplied by oxygen tank 11, obeying the order of electronic control unit 19, is injecting spray 55 of pure oxygen, because of the pressure of oxygen tank 11, regulated by valve 10 of fig.1a, or increased by a liquid oxygen pump not indicated. In this case pure oxygen is introduced in the combustion chamber before and during the same combustion, increasing not only the percentage of said oxygen in said combustion chamber but also increasing the total mass and by vertue of said increase, decreasing the combustion temperature.

So far we have described the various systems of our invention which enable us to increase the oxygen percentage in c.of c. and by vertue of the percentage increase not only to obtain a perfect combustion but also to increase the mass in said c. of c. and thus decreasing the temperature itself.

We must now examine the other system always the subject of our invention, which guarantees the achievement of the said objectives i.e. the perfect combustion and the control of the combustion temperature by increasing the oxygen percentage and reducing said temperature thus greatly reducing, or even eliminating, the production of Nitrogen oxydes NOX, economizing to the maximum the use of oxygen.

In this case the system subject of our invention is represented by the injection of hydrogen Peroxide $H_2O_2$.

With this injection the combustion will happen not only in an environment enriched with pure oxygen but also with a present concentration of the water vapour.

It is well known that at high temperature the water vapour, especially in the presence of superheated carbon, such as the unburnt particles, is breaking up, cracking, in hydrogen and oxygen with a noticeable request of heat from the environment. In particular Carbon reacts with water vapour according to the formula:

$$C + 2 H20 = CO2 + H2 - 17120 \ kCal$$

and carbon monoxide according to:

$$CO + H2O - CO2 + H2 - 11000 \ kCal$$

Therefore Hydrogen Peroxide is the ideal vehicle to increase with pure oxygen the percentage in the combustion chamber and at the same time to control the maximum temperature of the said combustion and force it to stay below the level of formation of the NOX.

It is known that by increasing the mass of the fluid handled in the chamber of combustion, with the same fuel injection the maximum temperature achievable will be reduced.

On the other hand Hydrogen Peroxide is an instable product wich, under certain conditions, can cause explosive mixtures.

But it is also true that the instability of hydrogen Peroxide decreases with an exponential law by decreasing the storing temperature and therefore the subject of our invention is a system where the hydrogen peroxide is stored in an adiabatic tank and kept at a constant and preset temperature below the temperature of the operating environment.

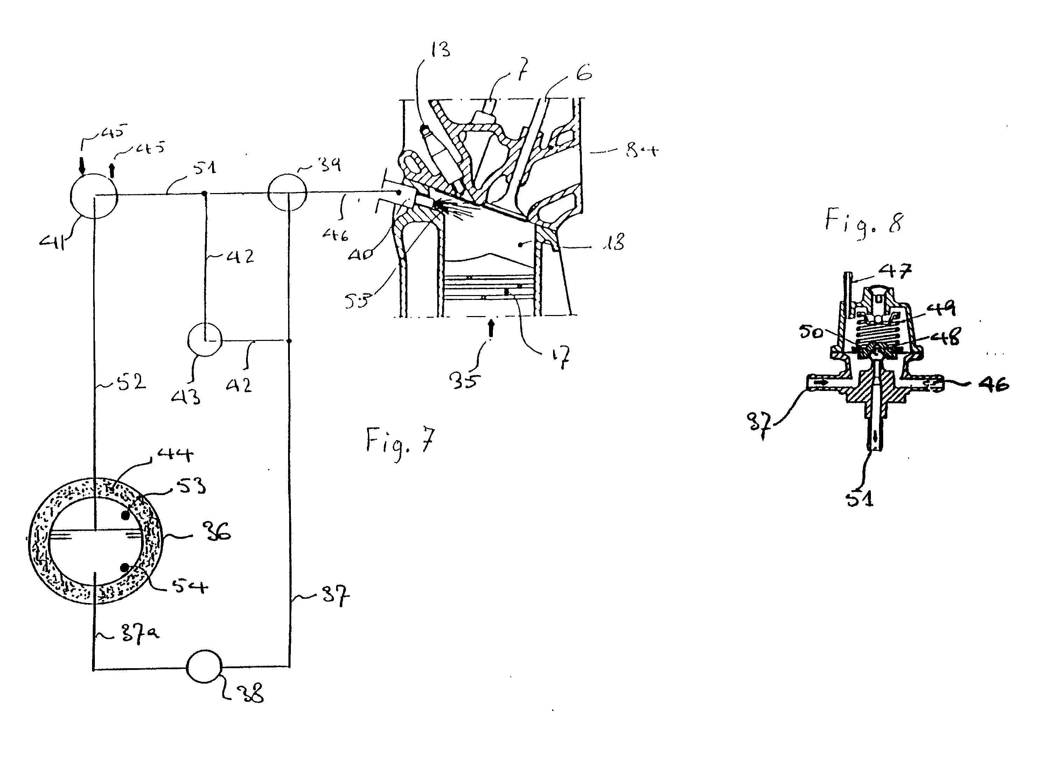

Let us examine in figure 7 a version of the invention.

The system is made by an adiabatic tank equipped with an adiabatic insulation, preferably of the vacuum type as in the oryogenic tanks, suitable for the storage of Hydrogen Peroide H2 02 with a concentration never above 90%, but preferably around 60%, even if the system is fully operational with concentration wall below the one indicated. One supply pump for the Hydrogen Peroxide, one pressure regulator, one metering injection valve similar to the metering valve of figure 2, one heat exchanger where the cooling fluid is supplied by a refrigerating unit, refrigerating unit not shown in figure 7, and the connecting lines.

It is known the Hydrogen Peroxide is an instable compound with the temperature increasing, and for this reason our invention contemplates its storage at a temperature equal or below 20° Celsius, even if the preferred temperature is around zero degrees Centigrade or below.

With reference to figure 7 the adiabatic tank 36, with adiabatic vacuum type insulation 44, equipped with loading plug and pressure relieve valve not shown, is filled with Hydrogen Peroxide of appropriate concentration, the preferred range being between 40% and 60%.

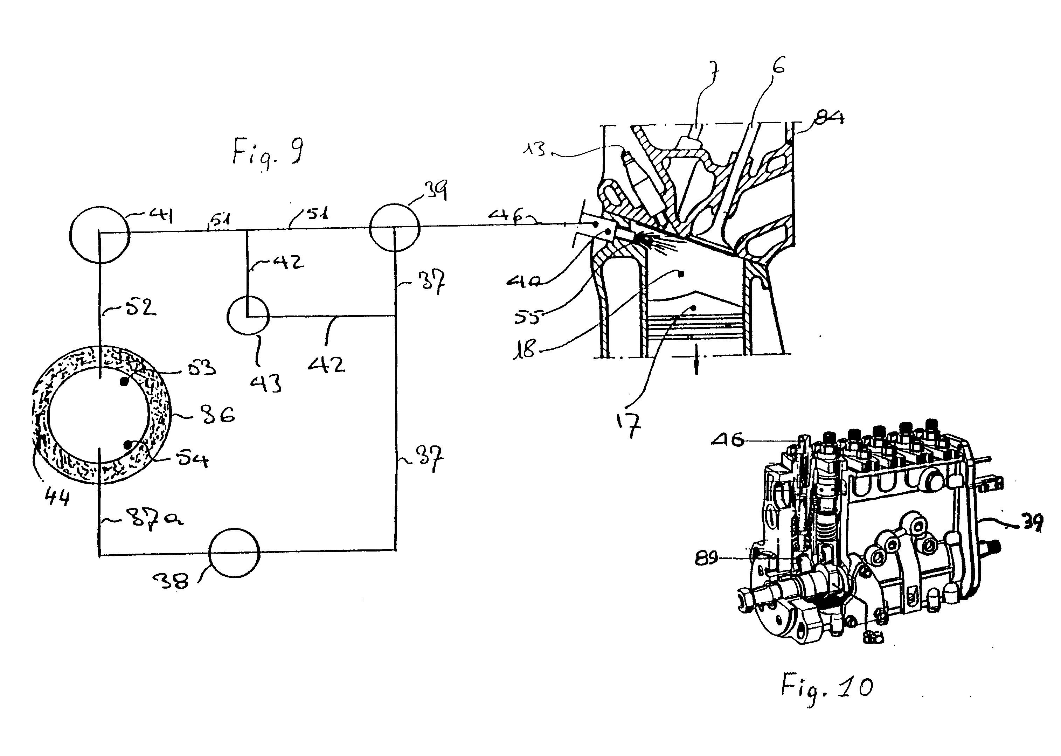

Conduit 37a intakes the Hydrogen Peroxide from the bottom of adiabatic tank 36 and through volumetric electro pump 38 send said Hydrogen Peroxide through conduit 37 to the pressure regulator 39, one of the preferred version of it being represented in detail in figure 8.

The pressure regulator 39 supply under constant pressure, through line 46, the electro metering injection valve 40 similar to the one described in figure 2.

The Hydrogen Peroxide, kept constantly under circulation by electropump 38, when electro metering injector 40 is closed, is fed back to adiabatic tank 36 through conduit 51. Said conduit 51 enters into heat exchanger 41 in which, through the flow indicated by arrows 45, circulates a refrigerating fluid at a preset temperature always below the storage temperature of adiabatic tank 36.

The electrically driven cooling plant, not indicated in figure is equipped with auxiliary power supply independent from the power generated by the I.C. engine, e.g. a lead acid battery, and therefore can be kept running and maintain the Hydrogen Peroxide at the preset temperature, topping up the heat losses through adiabatic insulation 44, even when the engine is stopped.

The Hydrogen Peroxide exhit from the heat exchanger 41 at the preset working temperature, never above 21° C, preferably around zero degrees Centigrades.

Adiabatic tank 36 is equipped with temperature sensors 53 and 54 and when, with the engine stopped, the temperature inside said adiabatic tank 36 approaches the preset safety temperature value, electronic control unit 19 indicated in figure 1, here not indicated but part of the system of figure 7, starts the electropump 38 and the cooling generating plant which supply heat exchanger 41. The cooling plant just mentioned, as already indicated, is not shown in figure 7, being one of the several refrigerating units available on the market, and is equipped with an independent power supply from the one generated by the engine.

Electronic control unit 19 pilots valve 43 of the by-pass 42, short closing the system and circulating the Hydrogen Peroxide of adiabatic tank 36 through heat exchanger 41 until the preset temperature is reached; pre-set temperature not above 20° Celsius but preferably around zero degrees Celsius.

Electronic control unit 19, through the reading of sensors 15 and 16 installed in the exhaust manifold of the engine, as indicated in figure 1 and not in figure 7, and through the reading of the rpm and of the fuel injected into the I.C. engine, as already described in the description of figure 1, compares the readings with those stored in the experimental matrix part of ECU 19 and sets the metering of electro-injector 40, and by consequence the quantity of Hydrogen Peroxide which is injected into the combustion chamber.

In doing so the combustion, in the chamber of combustion, takes place in an environment which mass has been increased with pure oxygen and water vapour, thus the oxygen guaranteeing a perfect combustion and the water vapour contributing to such combustion and also controlling the temperature of formation of the NOX in order to minimize such production.

Let us now examine in detail the functioning of the invention such as depicted in figure 7. In this figure 7 we have indicated only the cylinder head 84, of the Internal Combustion Engine, the combustion chamber 18, piston 17, movement of piston 17 with arrow 35, piston 17 is in compression moving towards Top Dead Center, intake valve 6 and exhaust valve 7 are closed. In said figure are indicated also fuel injector 13, or spark plug in case of a gasoline engine, and electro-metering injector 40 of Hydrogen Peroxide.

Adiabatic tank 36, with a vacuum insulation 44, is filled with Hydrogen Peroxide at a temperature below 20° celsius. Adiabatic tank 36 is equipped with filling plug and relieve valve not indicated is said figure.

Volumetric electropump 38 sucks Hydrogen Peroxide from conduit 37a and supply through conduit 37 the pressure regulator 39 of which on type is indicated in figure 8.

The pressure regulator, as it is known, has the task to maintain a constant pressure in conduit 37 and in feeding conduit 46, which supply electro injector 40, while the excess supply of the electro pump is sent back to adiabatic tank 36, through conduit 51.

The excess of Hydrogen Peroxide is thus fed through heat exchanger 41 which is refrigerated by a refrigerating fluid supplied always at a temperature below 20° C, such fluid as supplied by a standard refrigerating unit.

In this way, notwithstanding the heat generated by the engine and in particular the high temperature of the electro injector 40, the hydrogen Peroxide is kept at a temperature where the compound is stable.

The refrigerating unit is here represented only by the arrows 46, which indicate the flow of the refrigerating fluid.

Moreover the task of heat exchanger 41 is also the one of refrigerating the surplus of Hydrogen Peroxide, not used by electro injector 40, to a temperature of some two degrees Celsius, or less, below the temperature of the Hydrogen Peroxide stored in adiabatic tank 36.

Such temperature is measured by sensors 53 and 54 which signals are sent to electronic control unit 19, indicated in figure 1, which is not indicated in figure 7.

The task of such sensors is to allow electronic control unit 19 to pilot the refrigerating unit, here indicated with the arrows 45, in order to keep the temperature of the Hydrogen Peroxide stored in adiabatic tank 36 preferably around zero degrees Centigrades, but in any case never above 20° Celsius.

In the system it has been inserted by-pass 42 with the by-pass valve 43 in order to keep the temperature inside adiabatic tank 36, even when the engine is stopped, at a preset temperature around 0° Celsius, in any case never above 20° C, enabling thus electropump 38 to circulate the Hydrogen Peroxide through heat exchanger 41, all controlled by electronic control unit 19 of figure 1 here not indicated, with the signals coming from temperature sensors 53 and 54.

When piston 17, in the upstroke of compression indicated by arrow 35, is approaching TDC, valves 6 and 7 closed Hydrogen Peroxide $H_2O_2$ is injected.

Said moment is experimentally determined for each type of engine and $H_2O_2$ can be also injected before the fuel injection, as indicates in figure 7 by spray 55.

Electro injector 40, piloted by ECU 19 on the basis of the signal obtained as described in figure 1 and the relative description, compared with the experimental matrix stored in its memory, pilots the injection of hydrogen Peroxide into the combustion chamber, in a preset moment and a preset quantity.

In doing so the combustion takes place in an environment, the combustion chamber 18, where artificially we have created hyperoxigenation conditions and we have introduced a preset mass of water vapour which will control the temperature of combustion to an optimum level, experimentally determined, in order to avoid, or at least to reduce drastically, the production of NOX.

At the same time the excess of oxygen will impede the formation of CO and HC thus creating the conditions for a perfect combustion.

In fig. 8 we have represented a possible type of pressure regulator 39 of fig. 7, where the conduit which supply the reference pressure is indicated by 47.

The mobile system 48 keep the valve 50 closed under the action of spring 49.

Under these conditions conduit 46, which supplies electro injector 40, indicated in figure 7, is kept at the supply pressure of volumetric electropump 38 of said figure.

When electro injector 40 is closed the increase of pressure caused by the counterpressure on the volumetric pump causes the mobile system 48 to move upwards, in so doing opening the dish valve 50 and thus allowing the hydrogen Peroxide to flow back to adiabatic tank 36 through conduit 51, after having beeing cooled in heat exchanger 41.

A further variation of our invention is represented in figure 9.

The pump 39 in this plant is a Bosh type mechanical injection pump having a helicoidal pumping elements.

The positive displacement feeding pump 38 draws the oxygen Peroxide through the line 37a from the tank 36 which is kept in adiabatic condition by the insulating material 40 and sends it to the mechanical injection pump 39 through the line 37.

The Oxygen Peroxide arriving to pump 39 is always at the same temperature as the tank 36 which is below 20° C or is kept preferably around 0° C.

The distributor of the mechanical injection pump is operated by the control unit 19 of figure 1 (not shown) which regulates the delivery of oxygen Peroxide when the piston 17 is close to the end of the compression stroke; the direction is shown by the arrow 35 and the intake valve 6 is closed.

The mechanical injection pump atomizes the spurt 55 of oxygen Peroxide even before the start of the combustion if experimentally defined.

The combustion is caused by the spark of plug 13 in the case of a petrol engine or by the injection of the diesel fuel through the injector 13 in an environment which is overheated because of the compression in the case of a diesel engine.

The combustion will take place even, in this case in the combustion chamber 18 where the atmosphere has been enriched by a mixture of oxygen and water vapour which has been injected on purpose near the top dead center according to our expedient.

The pump 39 can be a standard mechanical injection pump either reciprocating or rotary type.

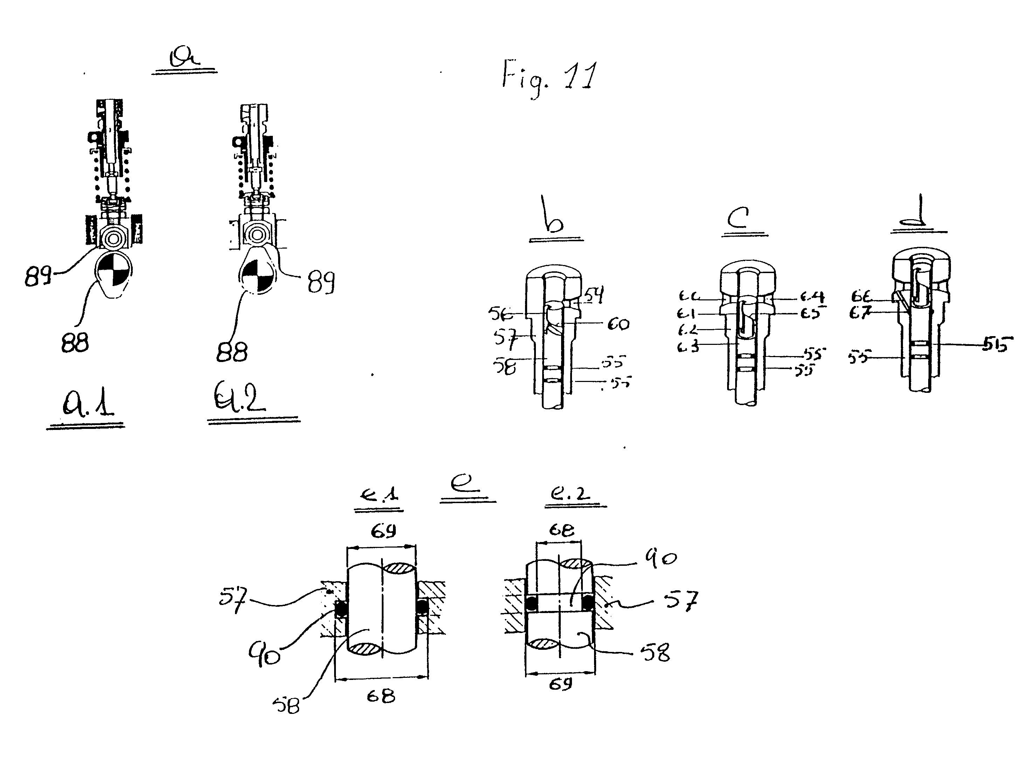

Figure 10 shows a standard mechanical injection pump where 39 represents the multiple pump having six delivery sides (46) and 88 and 89 represent the cam which drives one pumping element and tappet respectively.

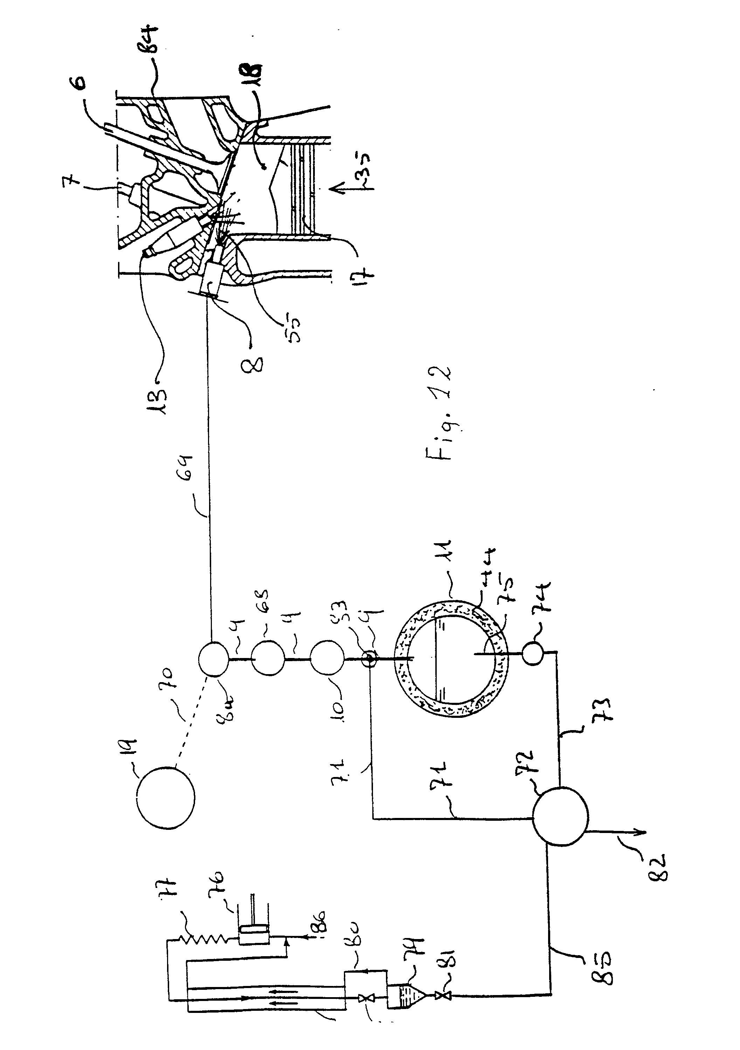

The only modification required, as shown in figures 11b, 11c, 11d, 11e, is the mechaning or two slots (see figure 11e) for the installation of two dynamic seals in order to prevent the blow-by of Oxygen Peroide in the lubricated timing case, where the cams convert the rotary motion into an alternating motion, see fig. 11a.

The plant is similar to the one of figure 7 described above except for this modification of the pump 39.

The figure 11a shows the standard drive of the pump elements of the pump of figure 10 where 88 and 89 represent the drive cam and pump element tappet.

The position a1 shows the pump element at the bottom dead center while position a2 shows the pump element at the top dead center.

It is clear that the pour seal, due to the mechaning tolerance, of the standard injection pumps could allow a small blow-by having ruinous consequences because the oxygen Peroxide would dissociate being in contact with the lubrification oil of the cam.

For this reason the pump elements have to be provided with a double dynamic seal.

Figure 11b shows the single port and lower regulation helicoid pump element at the bottom dead center.

The dynamic seal 55 is fitted in a proper slot 90 (See fig. 11a, e2) machined in the piston 58 which moves inside the cylinder 57 having a proper port 59 in order to regulate the inflow and the outflow.

Figure 11 (position e1) shows an alternative where the slot 90 is machined in the cylinder 57 and contains the seal 55 preventing the leaking of the piston 58.

The piston 58 is provided with a longitudinal groove 56 and a regulation helicoid 60, to slots 90 containing the dynamic seals 55 are machined below the above mentioned details.

Figure 11c shows a double ports and lower regulation helicoid pump element.

This pump element is also provided with two dynamic seals (55) located in proper slots (90) which are machined on the piston below the regulation helicoid; 60 represents the inflow port, 61 represents the longitudinal groove, 62 shows the cylinder, 63 represents the piston, 64 represents the inflow/outflow regulation port and 65 shows the regulation helicoid.

Figure 11d describes a pump element having blow-by recovery feature; 66 shows the backflow hole and 67 represents the anular groove.

The dynamic seals have also been fitted below the blow-by recovery in this solution in order to assure the maximum safety of the system.

Figure 11e (e1 and e2) shows, in detail, the dynamic seal 55, which is fitted inside the slot 90; 68 indicates the inside diameter of the slot 90 and 69 indicates the outside diameter of the pump element in order to clarify the location of the dynamic seal 55 according to the standard habit.

With reference to figure 6 and relative description, it is obviuos that the oxygen metering valve 8 and the fuel injector 13 can be built in a single body without removing anything from this invention, in the case of a compression ignition engine.

Referring to figure 7 and relevant description, the oxygen Peroxide injector 40 and the diesel final injector 13, can also be built in a single body in the case of a compression ignition engine in order to have just one hole in the cylinder heads.

With reference to figures 1,3,4, it is plain that the metering valve 8 or the injector (item 40 figures 7 and 9) can be installed on the exhaust manifold in order to create an oxygen enriched atmosphere where the post-combustion of HC and CO will take place. Leaving out the problem of the NOX removal, the problem of the partial or total elimination of HC and CO can be solved by the described expedient.

Just one oxygen injector built in the spark plug can be used in the case of a petrol engine in order to have a single hole in the cylinder head.

The same approach can be used for an oxygen Peroxide injection system.

We can now consider a main variance of this invention which allows the use of the liquid oxygen in the case of a zero-pollution automotive engine (Re.fig. 12).

It is known that the cryogenic tanks, having a vacuum type insulation, permit a small loss of heat, therefore the stored liquid oxygen slinghtly evaporates and goes out to the atmosphere in a gaseous status.

Th boiling temperature if the liquified air is about -194° C while the one of the liquid oxygen is about -183° C.

The liquid oxygen tank is equipped, in our invention, with a Linde machine or similar, with the purpose to produce liquid air which is used as cold generator to recondense the evaporated oxygen in order that it can be brought back in the same tank.

The Linde (or similar) machine which operates in open loop can be subsistuted by a similar one working in closed cycle with Argon, Neon, Helium, or the same vaporating oxygen without removing anything from this invention.

Figure 12 shows the internal combustion engine which is represented with cylinder head 84, intake valve 6, exhaust valve 7, combustion chamber 18 piston 17 and spark plug, or injector 13 in case of compression ignition.

The oxygen injector 8 is fitted in the head 84. The piston 17 compresses the air, which is sucked through the intake valve 6, (here is represented in closed position), during the compression stroke which is indicated by the arrow 35.

The liquid oxygen drawn from the tank 11 which has a oryogenic insulation (44) reduces its pressure in the pressure reducing valve 10 and then evaporates in the heat exchanger 68. The metering valve 8a injects the oxygen in the proper quantity in the combustion chamber (18) by means of the spray 55 through the injection 8 fed by the line 69. The metering valve 8a and the injector 8 can be built in the same unit.

The metering valve 8a is operated by the control unit 19 (already described in figure 1 ) through the electrical connection 70.

The evaporation of the oxygen fed to the engine is large enough to keep the temperature of the liquid oxygen in the cryogenic tank 11 below the critical value under these working conditions. The oxygen which evaporates due to the loss of heat through the cryogenic isolation, while the engine is stopped, e.g. during the garaging of the vehicle, passes through the three-way valve 83, and arrives to the heat exchanger 72 through the line 71.

The oxygen liquifies in the heat exchange 72 because of the cooling operated by the circulation of the liquid coming from the line 85, is sucked by the electrically driven pump 74 through the line 73 and is sent back to the tank 11 through the line 75.

The electric motor-driven pump 74 is supplied by an electric battery pack which is not shown in the figure.

The same battery pack supplies a motor-driven compressor 76 which takes in air from the atmosphere 86.

This air is compressed at a preset pressure, cooled down to room temperature in the heat exchanger 77, passed through the heat exchanger 87 and expanded through the expansion valve 78.

Part of the air liquifies due to the Joule-Thomson effect and deposits in the tank 79 while the remainder is drawn to the heat exchanger 87 through the line 80 and then sent back to the intake 86 of the compressor 76.

The liquified air is drawn through the line 85 to the heat exchanger 72, where it evaporates removing heat and bringing the gaseous oxygen from 71 back to the liquid status, and is then discharged in the atmosphere through the exhaust 82.

The liquid oxygen, in the above described version, can therefore be kept in the tank for long periods of time without any danger of emptying the tank. The tank is of course fitted with a refilling plug and a relief valve which are not shown in the figure.

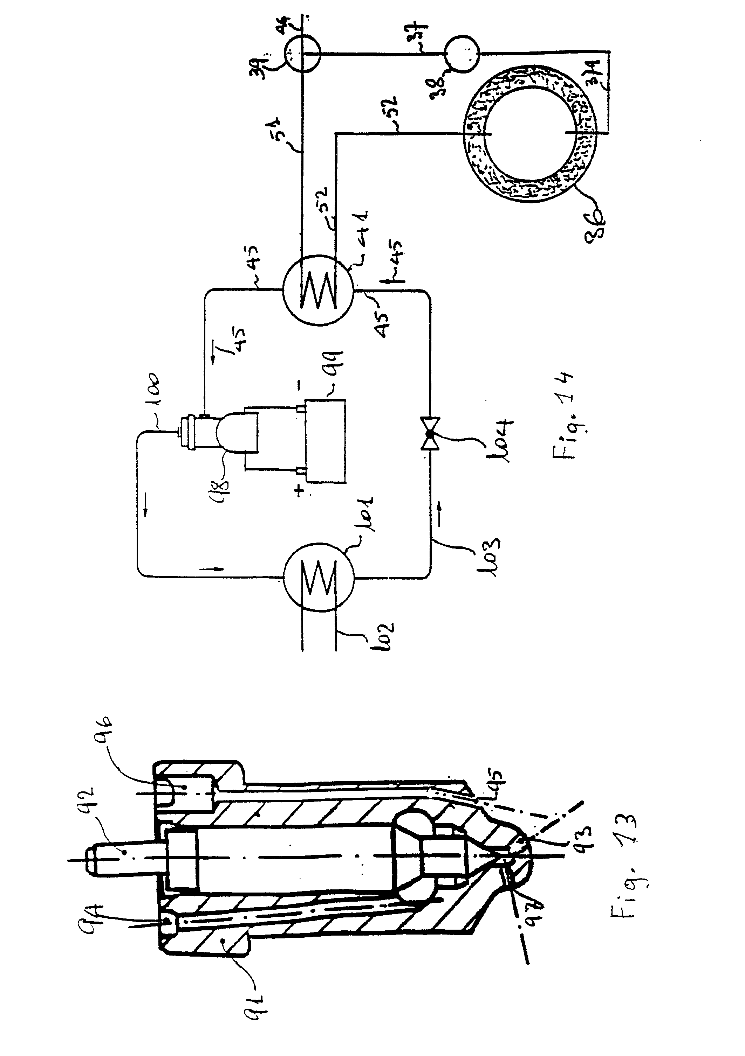

Figure 13 shows a type of atomizer which includes, in the same body, both the fuel injection and the injection of oxygen (or oxygen Peroxide) as previously described.

The atomizer is installed in a injector holder, which is not represented, and in the figure, 91 represents the atomiser body, 92 represents the moving element which closes tha main nozzle 93 and the auxiliary nozzle 97 which are fed with fuel by the inflow line 94.

The duct 16 and the nozzle 95 are built in the body of the atomizer.

Referring to figure 7, the duct 96 is fed with oxygen Peroxide by the high pressure line 46; the delivery of H2O2 is regulated by the metering valve 39 which is operated by the control unit 19 (not shown in the figure but properly described elsewhere in this text.

It is therefore demonstrated how it is possible to feed fuel and H2 O2, or oxygen comburent to the combustion chamber of an engine by using just one hole drilled in the cylinder head.

Figure 14 has shown, in detail, a possible configuration of the plant described in figure 7, in order to keep the temperature of the oxygen Peroxide tank 36 at a preset value independent of the loss of heat due to the insulation or of the heat adduction.

The heat exchanger 41 represented in figure 7 is the evaporator of the refrigerating plant described in figure 14. The motor-driven compressor 98 which is supplied by the electric power source 99 (electric battery pack in the case of car) compresses the refrigerating fluid and sends it to the condensator 101 through the line 100.

The fluid in the condensator is cooled down until it liquifies due to the heat removal accomplished by a collant circulating in the coil 102.

The fluid reaches the expansion valve 104 through the line 103 and then arrives in the evaporator 41 where the oxygen Peroxide which goes in 51 and out of 52 cools.

It is possible, under these conditions when the engine is stopped, to keep the oxygen Peroxide at a preset temperature independent from the loss of heat through the insulated walls of the tank 36.

## Claims

1. Plant to operate an internal combustion engine (spark ignition) afterwards called AS, or a compression ignition engine afterwards called AC, which dumps the combustion by-products into the surrounding atmosphere. This is charecterized by the fact that the a.m. plant consists of one or more tanks of liquid or gaseous pure oygen, of one metering system for the pure oxygen comburent delivery regulation and of a system which provides the direct or indirect injection of the oxygen into the combustion chamber of the above mentioned internal combustion engine, in order that the combustion takes place in a combustion chamber where the atmosphere has been enriched by oxygen at a higher rate than the one of the atmospheric air.

2. Plant to operate a type AS or AC internal combustion engine which discharges the combustion by-products into the surrounding atmosphere. This is characterized by the fact that the above mentioned plant consists of one or more adiabatic insulated tanks containing oxygen Peroxide at 90%, or diluited in distilled water in a lower percentage, at a temperature which never exceeds 20 °C, of one refrigerating plant independent from the engine in order to keep the temperature of the oxygen Peroxide around the preset temperature, of one metering system for the oxygen Peroxide delivery regulation, of a system which provides the direct or indirect injection of the oxygen Peroxide into the combustion chamber, in order that the combustion takes place in a combustion chamber where the atmosphere has been enriched of oxygen and water vapour at higher percentaces than the ones of the asmospheric air.

3. Plant to operate a type AS or AC internal combustion engine which dumps the combustion by-products as per claims 1 and/or 2, characterized by the fact that the metering of the pure oxygen and/or the oxygen Peroxide is performed in a pulsating way during the completion of the compression stroke and the above mentioned comburent is injected directly in the combustion chamber through the proper injector when the intake and the exhaust valves are closed.

4. Plant as per claims 1 and 3 characterized by the fact that the metering and the injection of the engine are performed by pulses coming from an electronic control unit which compares the data from the temperature and oxygen percentage sensors installed in the exhaust manifold at the cylinders outlet, from the fuel feeding sensor fitted in the Diesel oil injection pump if the engine si of AC type or from the intake air sensor of the engine is of AS type and from the rpm sensor, with the date stored into the unit memory which are relevant to a matrix experimentally defined one for each type of engine. The result of the comparison causes the delivery of a quantity of comburent which is necessary to bring the reading of the sensors located in the exhaust manifold back to the valves which are contained in the eperimental matrix.

5. Plant as per claim 2 characterized by the fact that the metering of the concentrated or diluted oxygen Peroxide takes place according to the procedure described in claim 4.

6. Plant as per claims 1 and 4 characterized by the fact that the injection occurs in a pulsating way through an injeector which is fitted outside the cylinder on the intake port while the intake valve is open.

7. Plant as per claims 1 and 4 characterized by the fact that the injection occurs in a pulsating way, through an injector which is fitted in the combustion chamber, during the induction stroke when the intake valve is open.

8. Plant to operate a type AS or AC internal combustion engine characterized by the fact that the induction is accomplished through a membrane which is selectively permeable to the oxygen; the induction air is forced through this membrane by a proper compressor in order to enrich them with oxygen and a depression is formed by the intake of a second compressor.

9. Plant to operate a type AS or AC internal combustion engine according to claim 8, characterized by the fact that the air with very little oxygen is discharged in the exhaust pipe in order to cool it and to partially recover the compression energy in a exhaust gas turbine.

10. Plant as per claims 1,3,4 characterized by the fact that the oxygen injection occurs through just one injector which includes the nozzle to atomize the fuel.

11. Plant built according to claim 2 characterized by the fact that the adiabatic tank containing a concentrated or diluited solution of H2 02 includes the temperature sensors which control the circulating pump, the by-pass circuit and the refrigerating plant to cool and to keep the liquid independent from the loss of heat due to the imperfect insulation at a preset constant temperature.

12. Plant built according to claim 2 characterized by the fact that the flow of the concentrated or diluited solution of H2 O2 from the injector back to the combustion chamber is cooled by a proper refrigerating plant to a preset temperature before it is brought back into the adiabatic tank containing concentrated or diluited solution of H2 O2.

13. Plant built according to claims 2,11 and 12 characterized by the fact that the pump for the injection of concentrated or diluited solution of H2 O2 has the pump element fitted with two dynamic seals installed in proper slots on the piston or the pump element or on the cylinder where the pump element is located.

14. Plant built according to claims 2,11,12 and 13 characterized by the fact that the injection of the concentrated or diluited solution of HE 02 and of the fuel takes place through just one injector.

15. Plant built according to claims 1 and folowing, characterized by the fact that the liquid oxygen tank is equipped with a system which recovers the oxygen, which evaporates because od the loss of heat due o the imperfect cryogenic insulation and that the above mentioned gaseous oxygen is liquified in a suitable heat exchanger by means of liquid air which is produced by a proper machine which is part of the a. mentioned plant; this machine is powered by an external electric power source independent from the AC or AS engine when these are idle.

16. Plant according to claim 15 characterized by the fact that the gaseous recovered oxygen is liquefied in the heat exchanger through the evaporation of liquefied Argon, Helium or Neon or the same oxygen which is produced by a proper separed system and which is part of the above mentioned plant; this is fed by an external electric power source independent from the AC or A3 engine but in closed loop.

17. Plant according to claims 1,3,4, 10,15 and 16 characterized by the fact that the limitation of the maximum combustion temperature is performed by increasing the mass of the oxygen which is injected in the combustion chamber when the intake and exhaust valves are closed, in a preset value according to the load of AC or AS engine.

18. Plant according to claims 1 and/or 2 characterized by the fact that the injection of oxygen or of diluted oxygen Peroxide occurs through on, injector, which is installed in the combustion chamber, which is included in the same housing as of the electric spark plug, which for the ignites the mixture of oxygen enriched air plus petrol.

19. Plant according to claims from 1 to 17 characterized by the fact that it is built following the description and/or the drawings of this Patent.

20. Plant according to claims from 1 to 18 characterized by the fact that it is built following a different combination of the elements which are described and/or showed in this Patent.

Fig. 1a

Inlet stroke

Fig. 1b

Compression    Fuel       Expansion    Exhaust
               injection

EP 0 456 016 A1

Fig. 4

Fig. 3

Inlet stroke    Compression    Combustion    Exhaust

Fig. 1c

Fig. 2

Fig. 6

Fig. 5

Fig. 8

Fig. 7

Fig. 9

Fig. 10

Fig. 11

EP 0 456 016 A1

Fig. 12

EP 0 456 016 A1

Fig. 14

Fig. 13

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y,A | DE-A-2 405 285 (G. VESTER)<br>* the whole document * | 1,3,18,6 | F 02 M 25/10<br>F 02 D 21/02<br>F 02 B 47/06 |
| | — — — | | |
| Y | DE-A-3 828 764 (W.GRAMM)<br>* column 5, lines 6 - 15; figure 4 * | 18 | |
| | — — — | | |
| X | US-A-4 167 920 (LEPERA ET AL.)<br>* column 1, line 62 - column 2, line 3; figures 1, 2 * | 1 | |
| | — — — | | |
| A | US-A-2 992 638 (R. BLOOM ET AL.)<br>* column 1, lines 10 - 22 * * column 2, lines 42 - 59; figures 1-3 * | 2,3 | |
| | — — — | | |
| A | PATENT ABSTRACTS OF JAPAN vol. 8, no. 20 (M-271) 27 January 1984,<br>& JP-A-58 178860 (TOYO KOGYO K.K.) 19 October 1983,<br>* the whole document * | 4,8 | |
| | — — — | | |
| A | US-A-3 958 538 (Y.HOSHINO)<br>* column 1, lines 49 - 61; figures 1-4 * | 10 | TECHNICAL FIELDS SEARCHED (Int. Cl.5) |
| | — — — | | |
| A | DE-A-3 018 634 (K.VÖHRINGER)<br>* claim 1; figure 1 * | 8,9 | F 02 M<br>F 02 D<br>F 02 B |
| | — — — | | |
| A | PATENT ABSTRACTS OF JAPAN vol. 10, no. 385 (M-548)(2442) 24 December 1986,<br>& JP-A-61 175261 (TADASHI SEKIGUCHI) 06 August 1986,<br>* the whole document * | 8 | |
| | — — — — — | | |

The present search report has been drawn up for all claims

| Place of search | Date of completion of search | Examiner |
|---|---|---|
| The Hague | 15 July 91 | ALCONCHEL Y UNGRIA J |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document